# EUROPEAN PATENT APPLICATION

(11) **EP 4 656 050 A1**
(43) Date of publication of application: **03.12.2025**
(21) Application number: 25179634.8
(22) Date of filing: 29.05.2025
(51) Int. Cl.: A01N 65/00, A01P 21/00, C05F 11/10

(54) **METHOD FOR THE PRODUCTION OF ORGANIC PLANT STIMULANTS**

(30) Priority: 30.05.2024 IT 202400012364
(71) Applicant: Green Greener S.r.l., 75025 Policoro (MT) (IT)
(72) Inventor: ANGLANA, Chiara, Policoro (MT) (IT); DI SANSEBASTIANO, Gian Pietro, Policoro (MT) (IT); STIGLIANO, Egidio, Policoro (MT) (IT)
(74) Representative: Tagliafico, Giulia

(57) **Abstract**

A method for the production of plant biostimulants secreted in the culture medium of aquatic or terrestrial mosses is here described.

It is a further object of the invention the use of the culture aqueous solution of the mosses for the preparation of a fertilizer composition for the biostimulation of plants, for example in agricolture, by means of the growth modulation and the stress response.

## Description

### FIELD OF THE INVENTION

The present invention relates to the field of fertilizers and biostimulants, and in particular to plant biostimulants obtained from the secretions of aquatic mosses in water. In greater detail, the present invention relates to a method for the production of plant biostimulants secreted in the culture medium of aquatic or terrestrial mosses and to the use of said plant biostimulants for the preparation of fertilizer compositions for the biostimulation of plants in agriculture and *in vitro* culture.

### BACKGROUND OF THE INVENTION

P. Du Jardin in "Plant biostimulants: Definition, concept, main categories and regulation" of 2015 reports that: "a plant biostimulant is any substance or microorganism applied to plants with the aim of improving nutritional efficiency, tolerance to abiotic stress and/or the qualitative characteristics of the cultures, irrespective of the nutrient content*".*

Phytohormones are among the main biostimulants because they affect all physiological processes. Auxins (AUX) are key regulators of plant growth, elongation, tissue development, and apical dominance. Cytokinins (CK) regulate growth from cell division and development by photomorphogenesis. Gibberellins (GA) are involved in seed germination, flowering, organ expansion/elongation or flower and fruit development.

Abscissic acid (ABA) is involved in plant responses to abiotic stresses (drought, cold, hot, salinity, etc.) and in the dormancy process. In addition, there are three other phytohormones involved in the responses to various abiotic and biotic stresses: Salicylic acid (SA), jasmonic acid (JA) and ethylene (ET).

Various methods for the production of phytohormones are known in the art:
a) extraction from the vascular plants, algae, bacteria or fungi associated with the plants (pathogens and symbionts). It is a disadvantageous production method, limited by the low concentration of hormones in these biomasses.
b) chemical synthesis. It is a complex, expensive and inefficient method due to the complex chemical structure of phytohormones;
c) microbial fermentation (Shi T.Q. et al., Bioengineered, 2017.;8(2), 124-128).

This bioproduction method is the preferred one for bioactivity and purity of the product obtained at a much lower cost than the production method based on chemical synthesis. Research in recent decades has shown various kinds of beneficial bacteria for plants with the ability to produce phytohormones, such as IAA (indole-3-acetic acid), CK, GA and ABA, acting as potent biostimulants in agriculture.

However, fermentation of microorganisms requires high technology bioreactors and sterile conditions with consequent increase in production costs. EP2358194B1 discloses a mixture of lipo-chito-oligosaccharides and soil to stimulate mycorrization and development of the radical apparatus of a plant, and use as an additive for the production of a arbuscular mycorrhiza inoculant.

WO2017205258 A1 reports a composition with the ability to improve the growth of maize plants comprising a *Bacillus amyloliquefaciens* and at least one lipo-chito-oligosaccharide (LCO), wherein LCO is a Nod factor or a Myc factor, and a method for improving the growth of maize plants comprising: a) applying to a corn seed, or exposing a corn seed, to a composition comprising an isolated and biologically pure culture of *Bacillus amyloliquefaciens,* or spores of *Bacillus amyloliquefaciens;* and, b) applying to the corn seed, or exposing the corn seed a, a composition comprising at least one LCO.

EP2748123A1 claims a package, comprising a first container and a second container, wherein the first container comprises at least one solubilizing phosphate microorganism, comprising a strain of the *Penicillium fungus,* a first agronomically acceptable carrier, and wherein the second container comprises at least one lipophite-oligosaccharide (LCO) and/or at least one chitooligosaccharide (CO) and a second agronomically acceptable carrier, wherein the first and second agronomically acceptable carriers may be the same or different, and wherein the at least one solubilizing phosphate microorganism and at least one LCO and/or at least one CO are each present in the first and second containers, respectively, in an amount effective to improve the growth of the plant to which it is applied relative to an untreated plant or seed thereof.

In US 20180235219A1 there is claimed a method comprising the application of *Trichoderma virens* GI-3 and at least one lipo-chito-oligosaccharide (LCO) to a plant seed in effective amounts to synergistically improve one or more growth parameters of the plant growing from said seed, and a composition of *Trichoderma virens* GI-3 and at least one lipo-chito-oligosaccharide (LCO). At present, in the field of agriculture, the need and therefore the use of phytohormones to increase the productivity and resilience of the crops has increased.

Aquatic mosses (Bryophytes) secrete the cis-zeatin and trans-zeatine phyhormones, together with their ribosides, known for their key role in regulating the growth and development of plants. These hormones affect cell division, differentiation and various plant physiological processes, contributing to overall growth and stress response.

Wang et al. (Phytochemistry, Vol. 19 [6], p. 1103-1105, 1980) detected two cytokinins in the culture media of gametophore over-producing mutants of the moss *Physcomitrella patens.* Anglana et al. (Aquatic Botany, Vol. 193, 103762, 24/02/2024) refer to axenic *in vitro* culture of aquatic mosses. It reports the simple cultivation of the mosses in different media and water, describing their adaptation to growth conditions.

Italian Patent Application N. IT201900016148 describes a water purification apparatus, in particular a filter, which contains biomass, in particular a mixture of Hypnales aquatic mosses that have been grown under different growth conditions, both from the environmental point of view (light, temperature, pressure) and from the point of view of the factors that regulate their growth (phytohormones).

Gonzalez-Perez et al. (World Journal of Microbiology and Biotechnology, Vol. 38[4], 2022) review the state of the art of microalgae-based biostimulants as a tool in agriculture by summarizing the biologically active compounds factors that influence the use of microalgae biostimulants and their application methods in the field.

However, it is clear that microalgae are organisms totally different from aquatic mosses. Moss is actually a plant in the phyla Bryophyta, so it lacks vascular tissue and stays pretty low-growing. It has casual alternate leaf blades with triangular pointed leaf heads. Many do not have true roots, but they can anchor with structures known as rhizoids. Microalgae are microscopically small, mostly single-celled species.

### SUMMARY OF THE INVENTION

The present invention aims to overcome the drawbacks of the prior art by providing a method for the production of plant biostimulants at low cost and easy applicability.

In particular, it is an object of the present invention to provide a method of producing plant biostimulants secreted in the culture aqueous solution (or aqueous culture medium) of aquatic mosses of the Amblystegiaceae, Hypnaceae family, or of terrestrial mosses.

A further object of the present invention is the use of said aqueous solution for the preparation of a fertilizer composition.

These and other objects of the present invention are achieved by means of a method incorporating the features of the appended claims, which form an integral part of the present description.

According to a first aspect, the present invention is directed to a method for producing plant biostimulants in aqueous solution comprising:
a) propagating gametophytes of at least an aquatic moss of the families Amblystegiaceae or Hypnaceae, preferably *Leptodictyum spp, Vesicularia spp, Taxiphyllum spp* or *Fontinalis spp,* or at least a terrestrial moss, in particular *Funaria spp* or *Physcomitrium spp,* in a solid medium containing macronutrients and micronutrients;
b) transferring the gametophytes grown in the solid medium into a liquid medium containing macronutrients and micronutrients and cultivating them until achievement of the corresponding mosses;
c) transferring and cultivating the aquatic moss resulting from step b) in water; and
d) separating the culture aqueous solution containing the plant biostimulants secreted in it by the mosses;
wherein the water used for culture c) is osmotic water having a conductivity lower than 100 µS/cm.

A different aspect of the present invention relates to a culture aqueous solution containing the plant biostimulants secreted therein obtained by said method.

A further object of the present invention is the use of said aqueous solution for the preparation of a fertilizer composition.

Advantageously, said composition is used for biostimulation of plants in agriculture or for *in vitro* culture. According to a further aspect, the object of the present invention is a fertilizer composition.

Further features and objects of the present invention will become more apparent from the following description.

### BRIEF DESCRIPTION OF THE DRAWINGS

The invention will be described below with reference to some examples, given for explanatory and non-limiting purposes, and illustrated in the attached drawings. These drawings illustrate different aspects and embodiments of the present invention and, where appropriate, reference numerals illustrating structures, components, materials and/or similar elements in different figures are designated by similar reference numerals. The controls are internal, they consist of plants grown under the same conditions as the treated plants and the increment data is relative to the internal control.

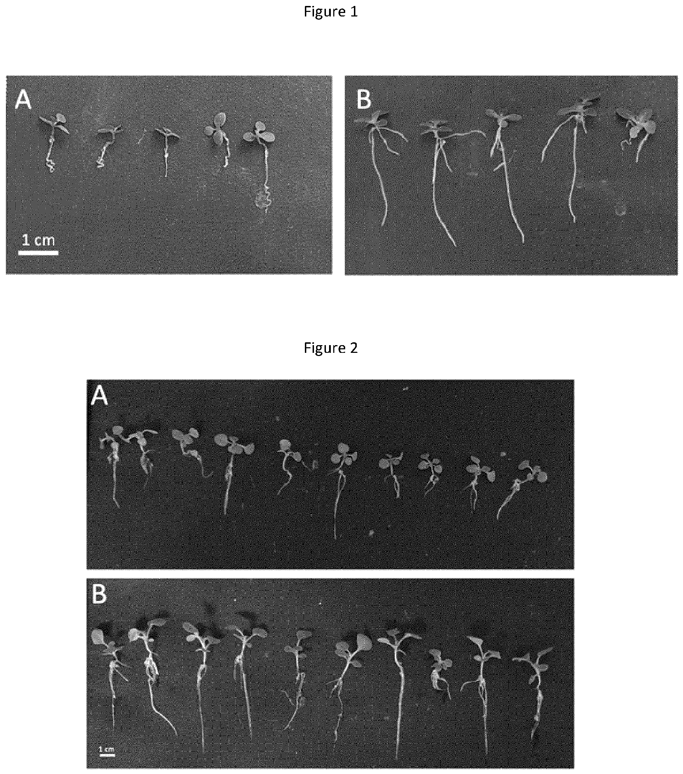

Figure 1 illustrates the biostimulant effects of the culture water, obtained according to the method of the present invention, on model plants of *Nicotiana tabacum* which were subjected to the *in vitro* experiment, described in Example 1.
   In detail, Fig. 1A shows the growth of control *Nicotiana tabacum* plants, the seeds of which have been germinated on solid medium without the addition of moss culture water, whereas Fig. 1B shows the growth of plants of *Nicotiana tabacum* in which seeds were germinated by adding the culture water (Solution A) to the solid medium at the 3% (v/v) concentration obtained according to the method of the present invention.
Figure 2 illustrates the biostimulant effects according to the experiment described in Example 3 on *Nicotiana tabacum* model plants. In detail, Fig. 2A shows the growth of untreated (control) *Nicotiana tabacum* plants, while Fig. 2B shows the root growth of *Nicotiana tabacum* plants treated by adding to the culture medium a composition consisting of Solution B with the addition of 2% (v/v) of Solution A and 1% (v/v) of *Taxiphyllum barbieri* hot extract prepared in Example C added to the culture medium at a concentration of 0.1% (v/v).

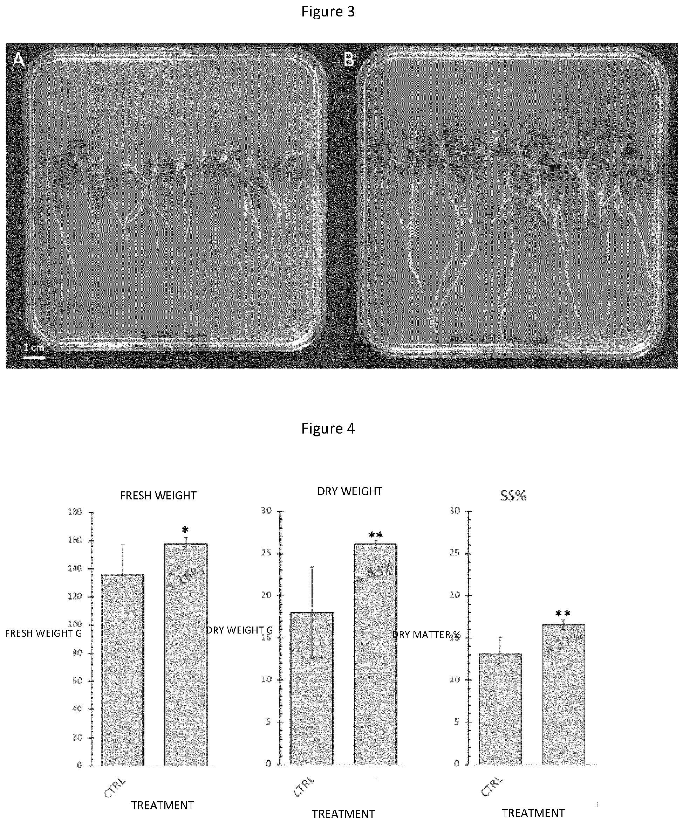

Figure 3 shows the experimental results described in Example 4 conducted to demonstrate the biostimulant effect of the object of the present invention in abiotic stress condition. Fig. 3A and Fig. 3A compare respectively *Nicotiana tabacum* control plants and plants treated with *Leptodictyum riparium* culture water (Solution A) at a concentration of 3% (v/v).
Figure 4 shows the bar graph obtained by reporting the values of fresh weight, dry weight and percentage dry matter (SS%) obtained from the experiment described in Example 5 of the present invention both for the plants of *Solanum lycopersicum* cv. Ikram for control and of the treated plants.

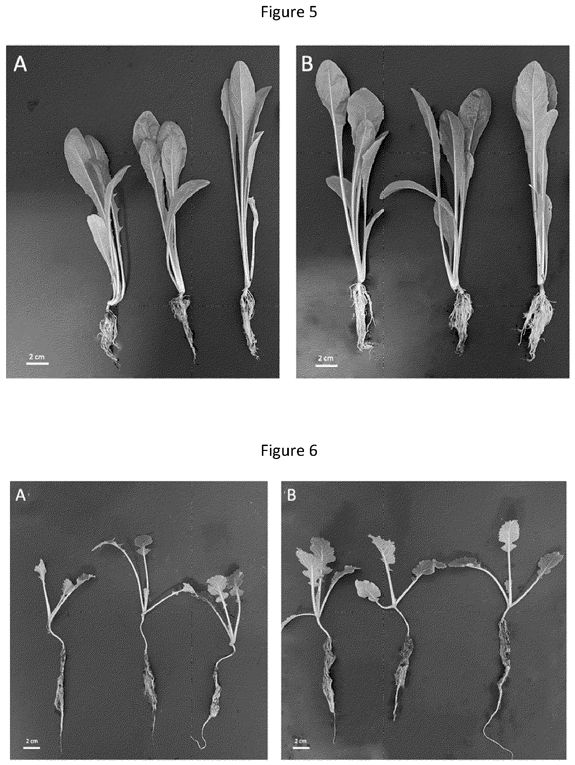

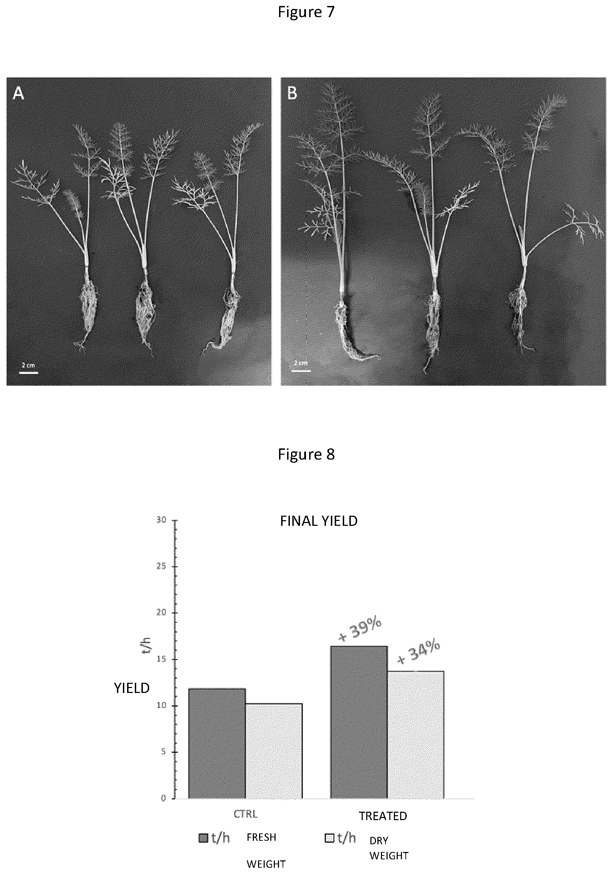

Figures 5, 6, and 7 illustrate the results of the experiment described in Example 6 carried out to evaluate the effect of the composition consisting of culture water of *Taxiphyllum barbieri* (Solution B) and *Leptodictyum riparium* (Solution A) (2% v/v), and 1% (v/v) of *Taxiphyllum barbieri* hot extract on the growth of greenhouse plants of transplant vegetables compared to plants not treated with such composition. Fig. 5A untreated *Cichorium intybus* plant, Fig. 5B treated *Cichorium intybus* plant; Fig. 6A untreated *Brassica rapa* plant, Fig. 6B treated *Brassica rapa* plant; and Fig. 7A untreated *Foeniculum vulgare* plant, Fig. 7B treated *Foeniculum vulgare* plant.
Figure 8 shows the bar graph of the final yield expressed in tons per hectare (t/h) of the parameter fresh weight (dark gray bars) and dry weight (light gray bars) for both untreated *Zea mays* and treated plants according to the experiment described in Example 8 of the present invention.

### DETAILED DESCRIPTION OF THE INVENTION

While the invention is susceptible to various modifications and alternative embodiments, some preferred embodiments will be described in detail below. It should be understood, however, that there is no intention of limiting the invention to the specific embodiment illustrated, but, on the contrary, the invention intends to cover all modifications, and alternative constructions falling within the scope of the invention as defined in the claims.

The use of "for example", "etc.", "or" indicates non-exclusive alternatives without limitation unless otherwise indicated. The use of "include" means "include, but not limited to" unless otherwise indicated.

The term "plant biostimulants" refers to natural compounds which act on the physiological and molecular processes of a plant in order to increase the yield and quality of the crop without having a nutritive function.

Non-limiting examples of plant biostimulants are: cis-zeatin, trans-zeatin, trans-zeatin riboside, N6-isopenteniadenosine (IP) and abscisic acid (ABA).

In particular, zeatin is a cytokinin, a phytohormone with biostimulant effects on plants, and can exist in different forms, including:
- Free zeatin: in trans-zeatin (tZ) and cis-zeatin (cZ) forms
- Zeatin riboside (tZR or cZR): form conjugated with a ribose
- Zeatin glucoside (tZOG, cZOG, tZ9G, cZ9G, etc.): form conjugated with a glucose molecule (can be O-glucosides or N-glucosides).

Zeatin ribosides (e.g. trans-zeatin riboside, tZR) are active transport forms in the phloem of plants; are converted into free zeatin at target sites thanks to the activity of specific enzymes; are biologically active (especially tZR), although generally less potent than free zeatin.

In micropropagation and *in vitro* culture, tZR is sometimes used as a more stable alternative to free zeatin.

Zeatin glucosides (e.g. zeatin-O-glucoside) are inactive storage forms. Glucosylation serves to regulate the availability of free zeatin in the plant. Zeatin glucosides are generally not directly active, but can be hydrolyzed (in some cases) to release free zeatin and are rarely used directly in propagation, except in specific studies.

N6-isopentenyladenine (iP) is a free, biologically active cytokinin. It is commonly used in *in vitro* culture and micropropagation, although less widely than zeatin. It promotes cell division, shoot growth and development of lateral buds.

N6-isopentenyladenosine (iPR, the riboside of iP) is an active transport form in plants, like trans-zeatin riboside (tZR). It can be converted to active iP in target tissues. It is biologically active, but generally less potent than iP itself. It is used experimentally and in some *in vitro* applications, especially when a more stable or less susceptible to degradation form is desired. As used in this description and in the claims, the term "culture carried out under axenic conditions" is intended to mean the culture of mosses of a single species, i.e., which grow in the absence of other species; while "culture in semi-axenic conditions" is meant the cultivation of organisms which takes place in the presence of contamination of other species of living organisms and microorganisms less than 10% by weight with respect to the biomass of mosses. In the present document "biomass" means the total mass of mosses present in the aqueous solution.

The term "osmotized water" and "osmotic water" means water free of impurities obtained by filtration by means of the reverse osmosis or similarly accurate processes.

"Macronutrients" for plants are compounds that provide the essential elements that plants require in large quantities, such as nitrogen, phosphorus, potassium, sulfur, calcium, and magnesium.

"Micronutrients" are compounds that provide the elements that plants require in very small quantities, such as iron, manganese, zinc, copper, boron, and molybdenum.

Macronutrients and micronutrients are generally salts.

In bryophytes (mosses, liverworts, and hornworts), the "gametophyte" is the most visible stage of the life cycle.

The method for the production of vegetable biostimulants, object of the present invention, comprises:
a) propagating gametophytes of at least an aquatic moss of the families Amblystegiaceae or Hypnaceae, preferably *Leptodictyum spp, Vesicularia spp, Taxiphyllum spp* or *Fontinalis spp,* or at least a terrestrial moss, in particular *Funaria spp* or *Physcomitrium spp,* in a solid medium containing macronutrients and micronutrients;
b) transferring the gametophytes grown in the solid medium into a liquid medium containing macronutrients and micronutrients and cultivating them until achievement of the corresponding mosses;
c) transferring and cultivating the aquatic moss resulting from step b) in water; and
d) separating the culture aqueous solution (or aqueous culture medium) containing the plant biostimulants secreted in it by the mosses;
wherein the water used for culture c) is osmotic water having a conductivity lower than 100 µS/cm.

Usually steps a) and b) are carried out as first steps at the beginning of the experimental activities, so that a container (usually a bioreactor) containing the aquatic moss cultivated as in step c) is always available to withdraw aquatic moss samples that can be grown in the same axenic or semi-axenic conditions for carrying out another experiment in another bioreactor. The solid medium and the liquid medium of steps a) and b) contain the suitable macronutrients and micronutrients and, optionally, compounds that act as carbon source and vitamins. Suitable media that can be used for steps a) and b) are ppNO₃ and ppNH₄ media.

The ppNO₃ (partially ammonium-free, nitrate-rich) medium is a growth medium specifically optimized for the growth of mosses, such as *Physcomitrium patens* and other Bryophyte species. It has been developed to support the development of the protenema and gametophyte without causing nitrogen stress or abnormal growth due to ammonium, which is poorly tolerated by many mosses.

Typical macronutrients (in balanced form):
- Potassium nitrate (KNO₃) - main source of nitrogen.
- Potassium phosphate (KH₂PO₄) - for phosphorus.
- Magnesium sulphate (MgSO₄) and calcium chloride (CaCl₂) - for magnesium and calcium.

### Micronutrients:

Including essential elements such as iron (chelated with EDTA), boron, manganese, zinc, copper, molybdenum - in similar or slightly reduced concentrations compared to MS medium.

### Vitamins (optional)

Typically added: thiamine, nicotinamide, pyridoxine (as in MS).

### Carbon source:

Usually 1-2% sucrose (10-20 g/L), although under some conditions mosses can be grown autotrophically without sugar.

### pH:

Adjusted to 6.0 before sterilization.

### Solidification (optional):

Addition of agar (6-8 g/L) for cultures on plates or solid media.

The ppNH₄ medium is a culture medium variant used in moss studies, characterized by the presence of ammonium ion (NH₄ ⁺) as a nitrogen source, alone or in combination with nitrates.

It is often used to investigate the response of mosses to ammonium, as this ion, if present in excess, can cause physiological stress, morphological alterations or modulate protonema growth. It contains NH₄ ⁺, usually supplied by ammonium chloride (NH₄Cl) or ammonium nitrate (NH₄NO₃). Ammonium is rapidly absorbed, influencing nitrogen metabolism and cell morphology.

Preferably, before initiating step a), gametophytes are sterilized. According to a preferred aspect of the invention, step a) is carried on solid ppNO₃ medium. Preferably step a) lasts at least two weeks.

Preferably, during such step a) the gametophytes are subjected to both macroscopic and microscopic observations to detect the presence of algae and other microorganisms. Routine checks for aerobic microbial contaminants are performed by assessing colony-forming units (CFUs).

Step b) may be carried out into flasks containing liquid medium, preferably shaken at 130 rpm, composed of water (usually having a conductivity of 60-100 µS/cm) and a concentration of ppNO₃ not exceeding 25% (v/v). Usually step b) lasts ten days.

Preferably, the culture step c), according to the present invention, is carried out under axenic or semi-axenic conditions; in particular with contamination of other species of living organisms and microorganisms lower than 10% by weight with respect to the biomass of mosses.

For initiating step c) usually 10-20 grams of biomass per 1 liter of liquid medium is transferred into a bioreactor.

Preferably, step d) is carried out by filtration, which allows separation of the moss biomass from the culture aqueous solution (or aqueous culture medium) containing the plant biostimulants.

According to a further aspect of the present invention, the method further comprises dialysis of the culture solution obtained from said step d) of said method; or alternatively the isolation and purification from said culture solution of the individual plant biostimulants secreted therein. During the propagation of the mosses, both in axenic and non-axenic conditions, a quantity of waste moss biomass is also generated, consisting of damaged or low-vitality filaments, as occurs in any micropropagation process of plant organisms. This waste is repurposed as inert biomass and, during its sterilization and bleaching process, and an extract may be obtained. Such extract is also rich in bioactive molecules with possible biostimulant effect and may be used in combination with the culture aqueous solution (or aqueous culture medium) containing the plant biostimulants of the present invention.

According to a further non-limiting embodiment, the culture of step c) is carried out at room temperature, in particular 20 ± 5°C.

Advantageously, the culture of step c) is carried out in a continuous light condition; preferably with an intensity of 80-100 pmol m⁻²s⁻¹.

Preferably the culture of step c) is carried out for at least 15 days, more preferably for at least 30 days.

According to a further non-limiting embodiment, the method comprises the cultivation of step c) in axenic condition of 1 kg of *Leptodctyum riparium* for 30 days of continuous light (80-100 pmol m⁻²s⁻¹), in 100 liters of water with a conductivity equal to 80 µS/cm.

A further object of the present invention is the culture aqueous solution containing the plant biostimulants secreted therein obtained by said production method.

According to a particular aspect of the invention, the plant biostimulants are selected from the group comprising cis-zeatin, trans-zeatin, trans-zeatin riboside, N6-isopentenyladenosine (IP) and abscissic acid (ABA).

The present invention is further directed to the use of said solution for the preparation of a fertilizer composition.

Preferably, said composition is used for biostimulation of plants in agriculture or in *in vitro* culture by modulating plant growth and stress response.

According to an embodiment according to the present invention, said fertilizer composition comprises the culture aqueous solution and optionally other biostimulating compounds. Embodiments of the present invention are described in the following examples by way of non-limiting example.

### EXAMPLES

### Example A: Preparation of the culture aqueous solution containing the plant biostimulants secreted in it by Leptodictyum riparium (Solution A)

10 g of the moss *Leptodictyum riparium* (which was previously grown in a solid medium ppNO₃ and in a liquid medium ppNO₃, according to steps a) and b) of the present invention) were grown under axenic conditions for 30 days, in a volume of osmotized water (conductivity 80 µS/cm) equal to 1 L in SETIS^{™} temporary immersion bioreactors in osmotic water (80 µS/cm) under standard growth conditions (22±2°C, 16/ 8 h photoperiod and light intensity of 150 µmol m⁻²s⁻¹). Then the liquid culture medium was collected and filtered using a 0.22 µm filter and stored in glass bottles at 4°C until use.

### Example B: Preparation of the culture aqueous solution containing the plant biostimulants secreted in it by Taxiphyllum Barbieri (Solution B)

1 kg of the moss *Taxiphyllum Barbieri* (which was previously grown in a solid medium ppNO3 and in a liquid medium ppNO3, according to steps a) and b) of the present invention) were grown for 30 days under semi-axenic conditions (aerated tanks) in water (conductivity 80 µS/cm) at a ratio of 100 L (22±2°C, 16/ 8 h photoperiod and light intensity of 150 µmol m⁻²s⁻¹). Then the liquid was collected and filtered with a 0.22 µm filter and stored in glass bottles at 4°C until use.

### Example C: Preparation of a hot extract of the moss Taxiphyllum barbieri

During the propagation of the species, both in axenic and non-axenic conditions, a quantity of waste biomass is also generated, consisting of damaged or low-vitality filaments, as occurs in any micropropagation process of plant organisms. This waste is repurposed as inert biomass and, during its sterilization and bleaching process, an extract is obtained.

Waste biomass of the moss *Taxiphyllum barbieri* was used to produce a hot extract, using 10 g of moss waste biomass in 250 ml of bidistilled water, treated for 16 minutes at 120°C and 1 atm. At the end of the process, the liquid was filtered (0.22 µm) and stored at -20°C until use.

### Example D: Preparation of the culture aqueous solution containing the plant biostimulants secreted in it by Vesicularia montagnei (Solution D)

10 g of the moss *Vesicularia montagnei* (which was previously grown in a solid medium ppNO₃ and in a liquid medium ppNO₃, according to steps a) and b) of the present invention) were grown under axenic conditions for 30 days, in a volume of osmotized water (conductivity 80 µS/cm) equal to 1 L in SETIS^{™} temporary immersion bioreactors in osmotic water (80 µS/cm) under standard growth conditions (22±2°C, 16/ 8 h photoperiod and light intensity of 150 µmol m⁻²s⁻¹). Then the liquid culture medium was collected and filtered using a 0.22 µm filter and stored in glass bottles at 4°C until use.

### Example 1: In vitro experiment with only the culture aqueous solution containing the plant biostimulants secreted in it by Leptodictyum riparium

The culture aqueous solution containing the plant biostimulants secreted in it by *Leptodictyum riparium* prepared in Example A (Solution A) was tested *in vitro* to verify the potential biostimulant effects on *Nicotiana tabacum* model plants. The seeds were germinated for 5 days on solid medium (Murashige and Skoog MS ½ - 0.5% sucrose) and the same seedlings were transferred to plates containing solid medium (Murashige and Skoog MS ½ - 0.5% sucrose) added with Solution A at different concentrations from 0.1 to 5% (v/v). The Solution A was taken from the bioreactor, filtered (0.22 µm) and added to the growth medium for the tobacco as it was without further processing.

The MS (Murashige and Skoog) culture medium is one of the most commonly used *in vitro* culture media for the growth of vascular plants. It was developed with the aim of supporting the rapid growth of plant tissues, especially tobacco, but is now widely used for a wide variety of species.

MS medium is characterized by a relatively high concentration of macro- and microelements, especially nitrogen, potassium and phosphorus, which promote vigorous growth of plant cells. The dose generally used of this medium is 4.4 g/L.
Major macronutrients:
   ∘Ammonium nitrate (NH₄NO₃)
   ∘Potassium nitrate (KNO₃)
   ∘Monopotassium phosphate (KH₂PO₄)
   ∘Magnesium sulfate (MgSO₄)
   ∘Calcium sulfate (CaCl₂)
Micronutrients:
   ∘Boron (H₃BO₃)
   ∘Manganese (MnSO₄)
   ∘Zinc (ZnSO₄)
   ∘Copper (CuSO₄)
   ∘Molybdenum (Na₂MoO₄)
   ∘Iron (EDTA chelated)
Carbon source:
   ∘Sucrose (30 g/L) is typically added as an energy source, as in vitro cultures are often not photosynthetically active in the early stages.
Vitamins:
   ∘The base medium usually includes thiamine (B1), nicotinamide (B3) and pyridoxine (B6).
pH:
   Usually adjusted to 5.7-5.8 before autoclaving.
Solidification:
   The medium can be used liquid or solid (by adding agar, usually 6-8 g/L).

According to our experiments, we used the halved amount 2.2 g/L (MS ½) and 0.5% sucrose (5 g/L).

After 15 days of incubation in a growth chamber (22±2°C, photoperiod 16/ 8 h and light intensity of 150 µmol m⁻²s⁻¹) the development of the treated *Nicotiana tabacum* seedlings was evaluated, compared to the untreated control, by detecting primary root length and fresh weight of the air part of 33 seedlings for treatment. A significant increase in the evaluated parameters was found at the concentration of 3% (v/v); in particular, an increase in the root length of 34% and fresh weight of 37% was observed in plants treated with this concentration compared to the untreated control (Figure 1).

### Example 2: In vitro experiment with only Taxiphyllum barbieri hot extract

The potential biostimulating effect of the hot extract of the *Taxiphyllum barbieri* moss (Tropica Aquarium plants; Mejlbyvej 200 8250 Ega, Denmark) prepared according to Example C was tested in vitro on *Nicotiana tabacum* model plants. The extract was added at different concentrations from 0.1 to 5% (v/v) to the solid culture medium (MS ½ - 0.5% sucrose) and as in Example 1 the tobacco seedlings, previously germinated, were moved for 15 days on the plates at different concentrations. By comparing the data of 33 plants for treatment with the untreated control, it emerged that at the lowest concentration of 0.1% (v/v) an increase in the radical length of 12% and the fresh weight of the aerial part of 52% was observed.

### Example 3: In vitro experiments with more complex compositions.

After an *in vitro* screening to test the potential of individual elements, the biostimulant effect of more complex formulations (2-3 ingredients) was tested on model plants of *Nicotiana tabacum* and following the protocol of Examples 1 and 2. In particular, the formulation consisting of Solution A and hot extract of *Taxiphyllum barbieri* prepared in Example C (1: 1) at the concentration of 1% showed an increase in the length of the radical apparatus compared to the control of 28%. A composition consisting of Solution B with the addition of 2% (v/v) of Solution A and 1% (v/v) of *Taxiphyllum barbieri* hot extract prepared in Example C added to the culture medium at a concentration of 0.1% (v/v), showed a 35% increase in primary root length and a 43% increase in the fresh air weight compared to the control (Figure 2).

### Example 4: In vitro experiment under stress conditions.

To test the potential biostimulating effect under abiotic stress conditions, *in vitro* experiments on tobacco model plants were carried out as described in the previous examples but recreating in plate a salt stress by adding to the solid medium (MS ½ - 0.5% sucrose) 150 mm NaCl and a water stress by adding 280 mM mannitol to the solid medium (MS ½ - 0.5% sucrose).

The treatment consisting of only Solution A at the concentration of 3% resulted in an increase of 232% in root length and of 300% in fresh weight compared to the control in plants with salt stress while in water stress an increase of 93% in weight and 4% for root length.

Using 0.1% hot extract of *Taxiphyllum barbieri* moss prepared in Example C as a treatment added to the culture medium, an increase of 37% of the fresh weight of the aerial part in salt stress and 85% in water stress conditions was observed instead.

### Example 5: Improvement of the growth of Solanum lycopersicum plants in greenhouse.

The experiment was carried out on *Solanum lycopersicum* cv. Ikram tomato plants (salad tomato) using as treatment Solution A without alterations with administration mode for leaf spray two times a week for four weeks with a 1.5% (v/v) solution in water. The plants were transplanted after 4 weeks from germination in the vessels predisposed for the deck in soil 70% sand - 30% peat (vigor plant) and a basic fertilization was made with 2 g of NPK original Gold (compo Expert). before starting the treatments carried out in the greenhouse under standard conditions (October 2022). After 15 days from the last treatment several parameters, including fresh and dry biomass, were manually evaluated by the operator. From the evaluation of 4 plants per thesis, an increase in fresh weight of 16%, dry weight of 45% and dry substance of 27% in treated plants compared to control was observed (Figure 4).

### Example 6: Improvement of the growth of plants in greenhouse of transplantation vegetables.

Using the growth waters of Solution B and Solution A (2% v/v) and in addition 1% (v/v) of *Taxiphyllum barbieri* hot extract prepared in Example C in the same composition, there was an improvement in the growth of young plants of horticultural and commercial interest grown in greenhouse destined for sale for transplantation in the field. The culture waters were collected and filtered (0.22 µm) but did not undergo further processing, the extract was prepared as described in the Example 2.

The experiment was carried out on 120-bay plateaux in a greenhouse at room temperature and conditions (October-November 2023, Arnesano (LE), Italy). The above-described undiluted composition was used for the treatment and administered by foliar (spray) with the undiluted solution, once a week for 4 weeks after 15 days from germination. The plants evaluated were: *Cichorium intybus* L. (Cicoria Catalonian Brindisina); *Brassica rapa* L. (Gr. Broccoletto, Novantina); *Foeniculum vulgare* Mill. (Fennel Aurelio).

For each species tested 32 plants were compared for treatment and as many for control for different parameters, including fresh weight and dry weight of the aerial part. The use of the composition allowed to show differences in growth with respect to the control used.

For chicory, an increase in fresh biomass of 29% and dry biomass of 32% was observed if compared to the control (Figure 5). For the turnip an increase of 14% and 19% of the same parameters (Figure 6). Finally, for the fennel an increase of 64% of the fresh weight and 51% of the dry weight (Figure 7). Other parameters evaluated as the magnitude of the aerial part and enzymatic activities (enzymes involved in the stress response) also showed differences with respect to the control, indicating that the treatment elicited a more than positive response in the young seedlings.

### Example 7: Improvement of the growth of plants in greenhouse of transplant vegetables subjected to abiotic stress.

Young plants of *Cichorium intybus* (Cicoria Catalogna Brindisina), *Brassica rapa* (Gr. Broccoletto, Novantina) and *Foeniculum vulgare* (fennel Aurelio) grown in 80-well plateaux in greenhouse conditions (DiSTeBA Botanical Garden, Lecce, November 2023) were treated for 4 weeks with spray application of a composition consisting of Solution B or Solution A (2% v/v) supplemented with the addition of 1% (v/v) of *Taxiphyllum barbieri* hot extract prepared in Example C (as in Example 6). One week after the last treatment were subjected to two types of stress: Salt by irrigation with 150 mm NaCl water for two weeks and water without any irrigation for one week.

At the end of the stress period several growth parameters were evaluated for 10 plants of each thesis. For the chicory, an increase of 28% and 15% respectively for fresh weight and dry weight was observed with respect to the control under saline stress conditions and 54% and 39% of the same parameters under water stress conditions. For the turnip under salt stress conditions the increase was 33% by fresh weight and 26% by dry weight while for the water stress of 12% by fresh weight and 3% by dry weight with respect to the control. The fennel had, with respect to the control, an increase of 45% by fresh weight and 28% by dry weight in the salt stress and of 56% both by fresh weight and by dry weight in the water stress.

### Example 8: Improvement of plant growth in the field.

At the experimental field of the experimental company "Pantanello" in Policoro (MT) 400 plants for *Zea mays* thesis were treated with spray leaf application of a composition consisting of Solution B and Solution A (2% v/v) and in addition, 1% (v/v) of *Taxiphyllum barbieri* hot extract prepared in Example C by shoulder atomizer at a concentration of 5% (v/v) with two treatments per week for 4 weeks (July-August 2023). For the treated plants an increase in the fresh weight of 30% and dry weight of 36% was observed with respect to the control. From the harvest analysis it emerged that the final productivity expressed in tons per hectare (t/h) was 39% higher by fresh weight and 34% by dry weight of the grain compared to the untreated control (Figure 8).

### Example 9: Comparative Example

The aim of this experiment was to demonstrate why moss cultivation in osmotic water (step c) previously mentioned) is preferred over traditionally used liquid culture media for the production of biostimulants according to the present invention.

Data collected during the experiment highlighted how the subsequent reuse of the by-product liquid medium at the end of the cultivation cycle damaged the plants, especially at the root system level, if it was composed of 100% to 50% ppNO₃ or ppNH₄.

In this *in vitro* experiment, *Nicotiana tabacum* plants were grown by adding the following treatments to a basic solid medium (MS ½ - 0.5% sucrose):
1% of Solution A;
1% of a culture aqueous solution containing the plant biostimulants secreted in it by *Leptodictyum riparium,* in which step c) was carried in ppNO₃ culture medium specifically formulated for the growth of bryophytes (here named Solution Z);
5% of Solution Z;
1% a culture aqueous solution containing the plant biostimulants secreted in it by *Leptodictyum riparium,* in which step c) was carried in pNH₄ culture medium specifically formulated for the growth of bryophytes (here named Solution Y);
5% of Solution Y;

The control sample consists of base medium + 5% H₂O 60 µS/cm.

After 14 days, the length of the primary root and the fresh weight of the aerial part of the seedlings were detected.

The following Table 1 reports the numerical values of primary root growth and fresh weight of the aerial part of *Nicotiana tabacum* plants subjected to the different treatments. The growth index was calculated as the product of the relative weight and the corresponding root length. The % increase is calculated with respect to the control. The control (CTRL) is set equal to 1. Statistical analysis: one-way ANOVA with Tukey's post-hoc test (* p< .05, ** p< .01, *** p< .001).

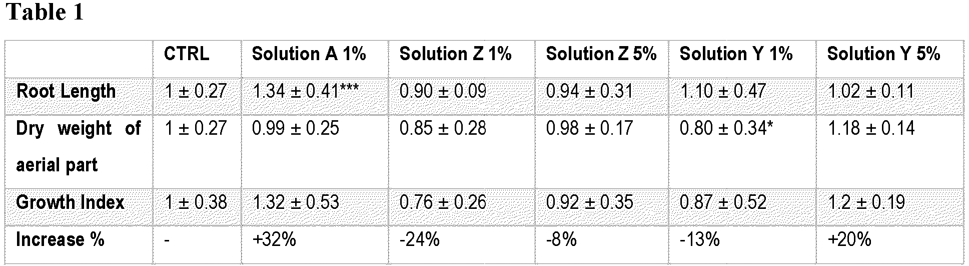

The data reported in Table 1 show that the major percent increase was obtained when the plants were treated with Solution A, i.e. the culture aqueous solution containing the plant biostimulants secreted in it by *Leptodictyum riparium,* in which step c) is carried out according to the present invention, i.e. in osmotic water having a conductivity lower than 100 µS/cm. It has also to be considered that the 5% ppNH₄ culture medium, due to its high ammonium content, can cause physiological stress, morphological alterations of the moss.

### Example 10: Chemical analysis of Solution A, Solution B and Solution D

Two groups of phytohormones were identified via UHPLC-MS analysis conducted on the biomass of *Leptodictyum riparium, Vesicularia montagnei* and *Taxiphyllum barbieri* and on Solution A, Solution D and Solution B.

Their identification and quantification in both types of samples corresponded to the cytokinins trans-Zeatin (tZ), trans-Zeatin O-glucoside (tZOG), trans-Zeatin riboside (tZR), trans-Zeatin riboside O-glucoside (tZROG), cis-Zeatin (cZ), cis-Zeatin O-glucoside (cZOG), cis-Zeatin riboside (cZR), cis-Zeatin riboside O-glucoside (cZROG), N6-isopentenyladenosine (iP), N6-isopentenyladenosine riboside (iPR), the auxins indole-3-acetic acid (IAA), and 2-oxindole-3-acetic acid (oxIAA), and finally abscisic acid (ABA).

The values concerning the concentration of the cytokinin Zeatin, in its trans conformation, both in its free form and as glucoside and riboside, are reported in Table 1.

**Table 1**

| | **tZ** | **tZOG** | **tZR** | **tZROG** |
|---|---|---|---|---|
| ***Leptodictyum riparium* biomass** | 0.921 ± 0.081 | 6.397 ± 0.561 | <LOD | <LOD |
| **Solution A** | <LOD | <LOD | <LOD | <LOD |
| ***Vesicularia montagnei* biomass** | 0.523 ± 0.061 | 1.607 ± 0.184 | 1.940 ± 0.478 | 2.766 ± 0.163 |
| **Solution D** | 0.137 ± 0.010 | <LOD | 0.117 ± 0.009 | <LOD |
| ***T. barbieri* biomass** | 0.083 ± 0.015 | 1.254 ± 0.026 | 0.454 ± 0.020 | 9.838 ± 1.468 |
| **Solution B** | <LOD | <LOD | <LOD | <LOD |
| | | | | |

In Table 1 the concentrations are expressed in pmol/g for biomass and pmol/ml for the solutions. LOD means limit of detection.

The values concerning the concentration of Zeatin, in its cis conformation, both in its free form and as glucoside and riboside, are reported in Table 2.

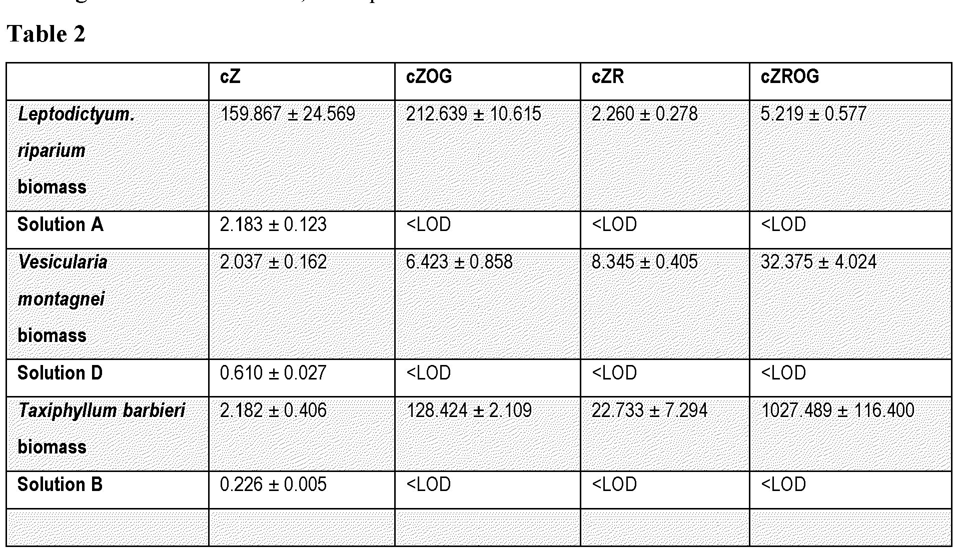

In Table 2 the concentrations are expressed in pmol/g for biomass and pmol/ml for the solutions. LOD means limit of detection

Another biostimulant detected was N6-isopentyladenosine in both iP and iPR forms (Table 3).

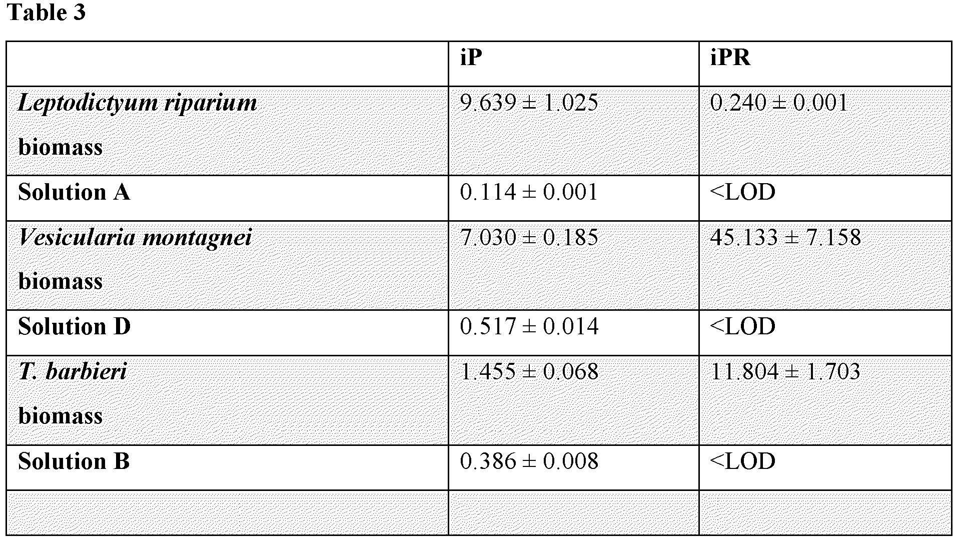

In Table 3 the concentrations are expressed in pmol/g for biomass and pmol/ml for the solutions. LOD means limit of detection.

Auxins IAA and oxIAA were detected only in the biomass of the three species, whereas ABA was detected only in the solutions, as reported in Table 4.

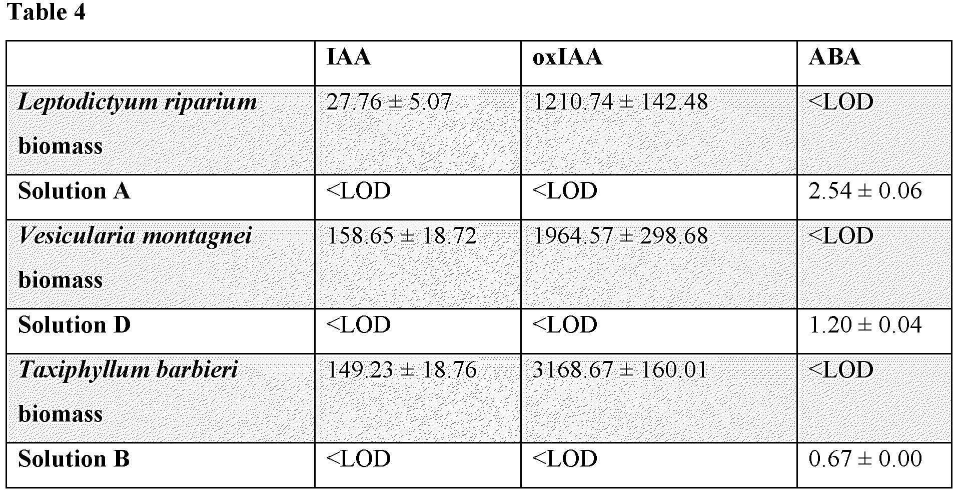

In Table 4 the concentrations are expressed in pmol/g for biomasses and pmol/ml for the solutions. LOD means limit of detection.

## Claims

1. A method for producing plant biostimulants in aqueous solution comprising:
a) propagating gametophytes of at least an aquatic moss of the families Amblystegiaceae or Hypnaceae, preferably *Leptodictyum spp, Vesicularia spp, Taxiphyllum spp* or *Fontinalis spp,* or at least a terrestrial moss, in particular *Funaria spp* or *Physcomitrium spp,* in a solid medium containing macronutrients and micronutrients;
b) transferring the gametophytes grown in the solid medium into a liquid medium containing macronutrients and micronutrients and cultivating them until achievement of the corresponding mosses;
c) transferring and cultivating the aquatic moss resulting from step b) in water; and
d) separating the culture aqueous solution containing the plant biostimulants secreted in it by the mosses;
wherein the water used for culture c) is osmotic water having a conductivity lower than 100 µS/cm.

2. The method according to claim 1, wherein culture c) is carried out in axenic conditions.

3. The method according to claim 1, in which the culture c) is carried out in semi-axenic conditions, in particular with contamination of other species of living organisms and microorganisms lower than 10% by weight compared to the moss biomass.

4. The method according to claim 1, further comprising a dialysis of the culture aqueous solution obtained from step d).

5. The method according to any of the previous claims, wherein the culture c) is carried out at room temperature, in particular 20 ± 5°C.

6. The method according to any of the previous claims, wherein the culture c) is carried out under continuous light conditions, in particular with an intensity of 80-100 µmol m⁻²s⁻¹.

7. The method according to any of the previous claims, wherein the culture c) is carried out for a period of at least 15 days.

8. The method according to any of the previous claims, further comprising the isolation and purification from the culture aqueous solution obtained from step d) of the individual plant biostimulants secreted therein.

9. The method according to any of the previous claims, wherein the plant biostimulants are selected from the group comprising cis-zeatin, trans-zeatin, trans-zeatin, riboside, N6-isopenteniadenosine (IP) and abscisic acid (ABA).

10. The culture aqueous solution containing the plant biostimulants secreted therein obtained by the method of any one of claims 1 to 9.

11. Use of the aqueous solution according to claim 10, for the preparation of a fertilizer composition.

12. Use according to claim 11, for the biostimulation of plants in agriculture or in *in vitro* culture.

13. Use according to any of claims 12, for modulation of plant growth and stress response.

14. A fertilizer composition comprising the aqueous solution according to claim 10.

15. The composition according to claim 14, further comprising other compounds, preferably sugars and salts.
